(19) Europäisches Patentamt
European Patent Office
Office européen des brevets

(11) EP 1 825 051 B1

# (12) EUROPEAN PATENT SPECIFICATION

(45) Date of publication and mention of the grant of the patent:
**11.03.2009 Bulletin 2009/11**

(21) Application number: **05808214.0**

(22) Date of filing: **22.11.2005**

(51) Int Cl.:
***D06M 13/432*** *(2006.01)* ***D06M 13/453*** *(2006.01)*
***D06M 11/66*** *(2006.01)* ***D06M 11/55*** *(2006.01)*
***D06M 11/56*** *(2006.01)* ***C09K 21/00*** *(2006.01)*

(86) International application number:
**PCT/EP2005/012452**

(87) International publication number:
**WO 2006/063661 (22.06.2006 Gazette 2006/25)**

## (54) COMPOSITIONS FOR THE FLAME-INHIBITING FINISHING OF FIBER MATERIALS

ZUSAMMENSETZUNGEN FÜR DIE FLAMMHEMMENDE AUSRÜSTUNG VON FASERMATERIALIEN

COMPOSITIONS POUR LE TRAITEMENT IGNIFUGE DE MATÉRIAUX FIBREUX.

(84) Designated Contracting States:
**AT BE BG CH CY CZ DE DK EE ES FI FR GB GR HU IE IS IT LI LT LU LV MC NL PL PT RO SE SI SK TR**

(30) Priority: **16.12.2004 EP 04029751**

(43) Date of publication of application:
**29.08.2007 Bulletin 2007/35**

(73) Proprietor: **Huntsman Textile Effects (Germany) GmbH**
**86462 Langweid a. Lech (DE)**

(72) Inventors:
- **DERMEIK, Salman**
  **86157 Augsburg (DE)**
- **LÜDEMANN, Simpert**
  **86399 Bobingen (DE)**

(56) References cited:
**GB-A- 1 174 866** **US-A- 4 723 959**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

The invention relates to aqueous compositions which can be prepared by a specific process from water, guanidine phosphate, amidosulfonic acid and ammonium sulfate, it also being possible to use ammonium sulfamate instead of amidosulfonic acid. It also relates to the use of the compositions for the treatment of fiber materials.

It is known to provide various materials, including textile fabrics, with a fire-retardant finish by applying nitrogen- and/or phosphorus-containing products. Thus, for example, US 5 418 282 describes polymer foams and wood particle boards which have a fire-retardant finish. For this purpose, during the manufacture of these articles, compositions which comprise, for example, ammonium phosphate, boric acid and ammonium borate are added in particle form.

US 2 935 471 reveals compositions which comprise a boron compound and an inorganic ammonium salt. The compositions are used for the fire-retardant finishing of cellulose materials. GB patent specification 1 174 866 describes aqueous solutions which can be used to provide fiber materials comprising cellulose with a fire-retardant finish. The aqueous solutions comprise one or more of the compounds ammonium sulfate, ammonium sulfamate or ammonium imidosulfonate.

US 4 448 841 reveals that textiles can be given a fire-resistant finish by treating them with aqueous compositions which comprise ammonium salts, e.g. ammonium sulfate, ammonium phosphate or ammonium sulfamate.

The aqueous compositions known from the prior art for the fire-retardant finishing of textile fabrics do not have optimum properties with regard to the stability and/or the properties of the fiber materials finished therewith. Particularly in the case of textiles made of polyester, the results obtained with known compositions are not optimal.

The object on which the present invention is based was to develop compositions with which fiber materials in the form of textile fabrics can be provided with a flame-retardant finish and where these fabrics have excellent flame-retardant properties, and where these compositions are especially well-suited for the flame-retardant finishing of fiber materials made of polyester.

The object has been achieved by an aqueous composition which is preparable by the following successive process steps

a) Preparation of a mixture of water and guanidine phosphate, the quantitative ratios being chosen such that the mixture has a phosphorus content in the range from 4.0 to 6.5% by weight.

b) Optional adjustment of the pH of the mixture to a value in the range from 4.5 to 6.5 at 20°C.

c) Addition of ammonium sulfamate or amidosulfonic acid in an amount such that, per 100 g of the mixture obtained after step b), 8 to 12 g of amidosulfonic acid or 9.5 to 15 g of ammonium sulfamate are used, or addition of a mixture of these two products.

d) Optional adjustment of the pH of the resulting mixture to a value in the range from 4.5 to 6.5 at 20°C.

e) Addition of ammonium sulfate in an amount such that, per 100 g of the mixture obtained after step d), 20 to 40 g of ammonium sulfate are used.

If fiber materials are finished with the aqueous compositions according to the invention, then highly effective fire-retardant properties can be attained. The fiber materials are preferably textile fabrics in the form of wovens, knits or nonwovens. Also, particularly in the case of textiles made of polyester fibers it is possible to achieve a highly effective fire-retardant finish whereas many compositions known from the prior art are unsuitable or insufficiently suitable for polyester.

Suitable polyester fibers are, in particular, fibers of polyethylene terephthalate, although compositions according to the invention are also suitable for textiles made of other polyester fibers.

In addition, using compositions according to the invention it is also possible to effectively provide textiles made of cellulose fibers or of mixtures of cellulose fibers and polyester fibers with a fire-retardant finish.

The treatment of fiber materials with compositions according to the invention can take place using equipment and according to methods which are known to the textile finisher. Of suitability, for example, is application by means of a pad mangle and subsequent drying, e.g. at 100 to 130°C. If appropriate, the drying can also be followed by a condensation, e.g. in the temperature range from 130 to 180°C.

Compositions according to the invention can be prepared by the above mentioned process steps. These will now be described in more detail.

Step a):

In this process step, a mixture of water and guanidine phosphate is prepared. For this, it is possible to use secondary guanidine phosphate which is formed from 2 mol of guanidine and 1 mol of orthophosphoric acid, or primary guanidine phosphate which is formed from 1 mol of guanidine and 1 mol of orthophosphoric acid. It is of course also possible to use a mixture of primary and secondary guanidine phosphate.

The mixture in step a) can, if appropriate, be prepared at elevated temperature, e.g. in the range from 30°C to 70°C, and with stirring.

In step a), the quantitative ratios of water and guanidine phosphate are to be chosen so that the resulting mixture has a phosphorus content (calculated as P)

in the range from 4.0 to 6.5% by weight. For example, it is possible to prepare a mixture which comprises 35% by weight of secondary guanidine phosphate.

Step b):

If the mixture obtained after step a) has a pH at 20°C in the range from 4.5 to 6.5, then step b) is not carried out. If, on the other hand, the pH of the mixture after carrying out step a) is outside of the specified range, then step b) has to be carried out. This step consists in adjusting the pH to a value within the specified range.

Orthophosphoric acid is well-suited for this adjustment of the pH if the pH of the mixture after carrying out step a) is higher than 6.5. The orthophosphoric acid can be used for this purpose, for example, as a 50 to 90% strength aqueous solution.

Step c):

In step c), 8 to 12 g of amidosulfonic acid $H_2N\text{-}SO_3H$ or 9.5 to 15 g of ammonium sulfamate $NH_4^{\oplus}H_2N\text{-}SO_3^{\ominus}$ are added to the mixture obtained after carrying out step a) and optionally step b) per 100 g of the mixture. It is also possible to add a mixture of these two products. In this case, an amount of this mixture is used which comprises $\frac{x}{100} * (8 \text{ to } 12)\text{ g}$ and $\frac{y}{100} * (9.5 \text{ to } 15)\text{ g}$ of ammonium sulfamate.

Here, x indicates how much percent by weight of amidosulfonic acid the mixture comprises, and y indicates how much percent by weight of ammonium sulfamate the mixture comprises. All of the specified amounts of amidosulfonic acid and ammonium sulfamate refer to solid, anhydrous products, although it is optionally also possible to use aqueous solutions of amidosulfonic acid or ammonium sulfamate instead of solid products in step c). The addition of amidosulfonic acid and ammonium sulfamate serves to achieve fire-retardant properties coupled with a soft handle of textiles.

Step d):

If the mixture obtained after carrying out step c) has a pH in the range from 4.5 to 6.5 at 20°C, then step d) is not carried out. If the pH is outside of this range, then step d) has to be carried out, namely an adjustment of the pH to a value within the range from 4.5 to 6.5 at 20°C. If the pH after carrying out step c) is lower than 4.5, then it is preferably corrected in step d) by adding ammonia. For this purpose, gaseous $NH_3$ can be introduced into the mixture. However, it is more advantageous to add an aqueous $NH_3$ solution, e.g. with a concentration of from 20 to 25% by weight.

Step e):

In step e), ammonium sulfate is added to the mixture obtained after carrying out step c) and optionally step d). In this step, 20 to 40 g of ammonium sulfate are used per 100 g of the mixture. These amounts refer to solid, anhydrous ammonium sulfate. This salt may be added in solid form or in the form of an aqueous solution of the mixture.

The addition of ammonium sulfate exerts an advantageous influence on the fire-retardant properties of textile fiber materials which have been treated with compositions according to the prior art, in particular textile fabrics made of polyester fibers.

After adding ammonium sulfate, the mixture obtained can, if desired, be diluted with water.

At the end of step e), the resulting mixture is preferably stirred, optionally at elevated temperature, until a clear solution is formed.

The composition obtained after step e) can, optionally following dilution with water, be used for the fire-retardant finishing of textile fabrics. It can, however, also be added prior to the use of other products which are known to the person skilled in the art for textile finishing. However, during their use, compositions according to the invention preferably comprise no other nitrogen- or phosphorus-containing products apart from those mentioned above, with the exception of urea. In addition, it is preferred if they comprise neither boron compounds nor halogen compounds.

In a number of cases, it may be advantageous if, after carrying out step e), one or more other products are also added to the resulting mixture. These products are chosen from sodium acetate, urea and sodium hydroxide. Preference is given to using the following amounts, if the product in question is used at all, per 100 g of the mixture obtained after step e):

0.7 to 1.3 g of sodium acetate
0.7 to 1.3 g of urea, and
sodium hydroxide in an amount such that the resulting composition has a pH in the range from 5 to 6.5 at 20°C. These amounts refer to solid, anhydrous products, although the products can be used in solid, pure form or in the form of aqueous solutions. It is advantageous not to add sodium hydroxide to the composition before the addition of sodium acetate or urea, but only afterwards.

The invention will be illustrated below by working examples.

Example 1

Preparation of a composition according to the invention.

200 kg of secondary guanidine phosphate (prepared from $H_3PO_4$ and guanidine carbonate

$$H_2N\text{-}C(=NH)\text{-}NH_3^{\oplus} \quad HCO_3^{\ominus}$$

in the molar ratio 1:2) are added to 375 kg of demineralized water. The addition of approximately 60 kg of 80% strength orthophosphoric acid gives a clear solution of pH 5.5. 60 kg of amidosulfonic acid ($H_2N\text{-}SO_3H$) are added thereto. The pH is then adjusted to a value of 5.5 using 46 kg of 25% strength aqueous ammonia solution. After adding 200 kg of solid ammonium sulfate and stirring, a clear solution is obtained. This is diluted with 86 kg of water. 11 kg of sodium acetate and 11 kg of urea are then added and the mixture is stirred again until a clear solution is formed. A pH of approximately 5.5 is established by adding aqueous sodium hydroxide solution.

Example 2

The solution obtained according to Example 1 is filtered in order to remove residues of impurities.

Textile fabrics made of fiber materials are then finished.

Example 2a) (according to the invention)

Polyester fabric with an $m^2$ weight of about 135 g is treated in an aqueous liquor which consists of 200 g of the composition prepared according to Example 1 per liter in a pad mangle such that a liquor pick-up of approximately 75%, based on the textile weight results. The fabric is dried for 10 minutes at 110°C.

Example 2b) (according to the invention)

Polyester fabric with an $m^2$ weight of about 270 g is treated in an aqueous liquor which consists of 200 g of the composition prepared according to Example 1 per liter in a pad mangle such that a liquor pick-up of approximately 110%, based on the textile weight, results. The fabric is dried for 10 minutes at 110°C..

Examples 2c) and 2d) (comparative examples not in accordance with the invention)

Examples 2a and 2b are repeated but using a comparison composition instead of the composition according to the invention as in Example 1. In other respects, Example 2c) corresponds to Example 2a) and Example 2d) corresponds to Example 2b).

The comparison composition is a known fire-retardant composition in the form of an aqueous solution which comprises approximately 30% by weight of ammonium sulfamate, 5% by weight of ammonium salt of an orthophosphoric methyl ester, 2% by weight of urea and 6% by weight of borax. It comprises neither guanidine phosphate nor ammonium sulfate.

In accordance with the methods described in DIN 54336, edition from November 1986, the burning time, the glowing time and the tear length (= degree of destruction) are determined on the four fabric samples from Examples 2a) to d). The results are shown in the table below.

Table

| Flaming time 3 sec: | | |
|---|---|---|
| | Example 2a) | Example 2c) |
| Burning time sec | 0 | 19 |
| Glowing time sec | 0 | 0 |
| Tear length mm | 30 | 60 |
| | | |
| Flaming time 15 sec: | | |
| | Example 2a) | Example 2c) |
| Burning time sec | 0 | 15 |
| Glowing time sec | 0 | 0 |
| Tear length mm | 100 | 145 |
| Flaming time 3 sec: | | |
| | Example 2b) | Example 2d) |
| Burning time sec | 3 | 16 |
| Glowing time sec | 0 | 0 |
| Tear length mm | 55 | 80 |
| | | |
| Flaming time 15 sec: | | |
| | Example 2b) | Example 2d) |
| Burning time sec | 0 | 0 |
| Glowing time sec | 0 | 0 |
| Tear length mm | 100 | 120 |

It is evident from these results that the Examples 2a) and 2b) according to the invention lead to better results than the comparison Examples 2c) and 2d).

## Claims

1. An aqueous composition preparable by the following successive process steps

    a) Preparation of a mixture of water and guanidine phosphate, the quantitative ratios being chosen such that the mixture has a phosphorus

content in the range from 4.0 to 6.5% by weight.

b) Optional adjustment of the pH of the mixture to a value in the range from 4.5 to 6.5 at 20°C.

c) Addition of ammonium sulfamate or amidosulfonic acid in an amount such that, per 100 g of the mixture obtained after step b), 8 to 12 g of amidosulfonic acid or 9.5 to 15 g of ammonium sulfamate are used, or addition of a mixture of these two products.

d) Optional adjustment of the pH of the resulting mixture to a value in the range from 4.5 to 6.5 at 20°C.

e) Addition of ammonium sulfate in an amount such that, per 100 g of the mixture obtained after step d), 20 to 40 g of ammonium sulfate are used.

**2.** The composition as claimed in claim 1, **characterized in that** after step e) a further step f) is carried out, where, in step f), per 100 g of the mixture obtained after step e),
0.7 to 1.3 g of sodium acetate
and/or
0.7 to 1.3 g of urea
and/or
sodium hydroxide are added to the mixture in an amount such that the resulting mixture has a pH at 20°C in the range from 5 to 6.5.

**3.** The composition as claimed in claim 1 or 2, **characterized in that**, in step b), the pH is adjusted by adding phosphoric acid.

**4.** The composition as claimed in one or more of claims 1 to 3, **characterized in that**, in step d), the pH is adjusted by adding aqueous ammonia solution.

**5.** The use of a composition according to one or more of claims 1 to 4 for the treatment of fiber materials.

**6.** The use as claimed in claim 5, **characterized in that** the fiber materials are textile fabrics in the form of wovens, knits or nonwovens.

**7.** The use as claimed in claim 5 or 6, **characterized in that** the fiber materials consist of polyester fibers.

## Patentansprüche

**1.** Wässrige Zusammensetzung, herstellbar durch folgende, nacheinander ablaufende, Verfahrensschritte

a) Herstellen einer Mischung aus Wasser und Guanidinphosphat, wobei die Mengenverhältnisse so gewählt werden, dass die Mischung einen Phosphorgehalt im Bereich von 4,0 bis 6,5 Gew% besitzt.

b) Gegebenenfalls Einstellen des pH-Werts der Mischung auf einen Wert im Bereich von 4,5 bis 6,5 bei 20°C.

c) Hinzufügen von Ammoniumsulfamat oder Amidosulfonsäure in einer solchen Menge, dass pro 100 g der nach Schritt b) erhaltenen Mischung 8 bis 12 g Amidosulfonsäure oder 9,5 bis 15 g Ammoniumsulfamat verwendet werden, oder Hinzufügen einer Mischung dieser beiden Produkte.

d) Gegebenenfalls Einstellen des pH-Werts der erhaltenen Mischung auf einen Wert im Bereich von 4,5 bis 6,5 bei 20°C.

e) Hinzufügen von Ammoniumsulfat in einer solchen Menge, dass pro 100 g der nach Schritt d) erhaltenen Mischung 20 bis 40 g Ammoniumsulfat verwendet werden.

**2.** Zusammensetzung nach Anspruch 1, **dadurch gekennzeichnet, dass** anschließend an Schritt e) noch ein Schritt f) durchgeführt wird, wobei in Schritt f) pro 100 g der nach Schritt e) erhaltenen Mischung
0,7 bis 1,3 g Natriumacetat
und/oder
0,7 bis 1,3 g Harnstoff
und/oder
Natriumhydroxid in einer solchen Menge, dass die erhaltene Mischung einen pH-Wert bei 20°C im Bereich von 5 bis 6,5 besitzt,
der Mischung hinzugefügt werden.

**3.** Zusammensetzung nach Anspruch 1 oder 2, **dadurch gekennzeichnet, dass** in Schritt b) der pH-Wert mittels Zugabe von Phosphorsäure eingestellt wird.

**4.** Zusammensetzung nach einem oder mehreren der Ansprüche 1 bis 3, **dadurch gekennzeichnet, dass** in Schritt d) der pH-Wert mittels Zugabe von wässriger Ammoniaklösung eingestellt wird.

**5.** Verwendung einer Zusammensetzung gemäß einem oder mehreren der Ansprüche 1 bis 4 zur Behandlung von Fasermaterialien.

**6.** Verwendung nach Anspruch 5, **dadurch gekennzeichnet, dass** die Fasermaterialien textile Flächengebilde in Form von Geweben, Maschenware oder Vliesen (non-wovens) sind.

**7.** Verwendung nach Anspruch 5 oder 6, **dadurch gekennzeichnet, dass** die Fasermaterialien aus Polyesterfasern bestehen.

## Revendications

**1.** Une composition aqueuse pouvant être préparée par les étapes de procédé successives suivantes:

a) Préparation d'un mélange d'eau et phosphate de guanidine, en des rapports quantitatifs choisis de façon que le mélange présente une teneur en phosphore comprise entre 4,0 et 6,5% en poids.
b) Éventuel ajustement du pH du mélange à une valeur comprise entre 4,5 et 6,5 à 20°C.
c) Addition de sulfamate d'ammonium ou d'acide amidosulfonique en une quantité telle que, par 100 g du mélange résultant de l'étape b), 8 à 12 g d'acide amidosulfonique ou 9,5 à 15 g de sulfamate d'ammonium sont employés, ou addition d'un mélange de ces deux produits.
d) Éventuel ajustement du pH du mélange obtenu à une valeur comprise entre 4,5 et 6,5 à 20°C.
e) Addition de sulfate d'ammonium en une quantité telle que, par 100 g du mélange résultant de l'étape d), 20 à 40 g de sulfate d'ammonium soient employés.

**2.** La composition telle que revendiquée dans la revendication 1, **caractérisée en ce que** après l'étape e) est mise en oeuvre une autre étape f), dans laquelle étape f), par 100 g du mélange résultant de l'étape e), 0,7 à 1,3 g d'acétate de sodium et/ou 0,7 à 1,3 g d'urée et/ou d'hydroxyde de sodium sont ajoutés au mélange en une quantité telle que le mélange résultant présente un pH à 20°C compris entre 5 et 6,5.

**3.** La composition telle que revendiquée dans la revendication 1 ou 2, **caractérisée en ce que**, dans l'étape b), le pH est ajusté par addition d'acide phosphorique.

**4.** La composition telle que revendiquée dans une ou plusieurs des revendications 1 à 3, **caractérisée en ce que**, dans l'étape d), le pH est ajusté par addition d'une solution aqueuse d'ammoniaque.

**5.** L'utilisation d'une composition selon une quelconque des revendications 1 à 4, pour le traitement de matières fibreuses.

**6.** L'utilisation telle que revendiquée dans la revendication 5, **caractérisée en ce que** les matières fibreuses sont des matériaux textiles sous forme tissée, tricotée ou non-tissée.

**7.** L'utilisation telle que revendiquée dans la revendication 5 ou 6, **caractérisée en ce que** les matières fibreuses consistent en fibres de polyester.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 5418282 A
- US 2935471 A
- GB 1174866 A
- US 4448841 A